# EUROPÄISCHE PATENTSCHRIFT

(11) **EP 2 427 683 B1**
(45) Veröffentlichungstag und Bekanntmachung des Hinweises auf die Patenterteilung: **27.11.2013**
(21) Anmeldenummer: 10719267.6
(22) Anmeldetag: 03.05.2010
(51) Int. Cl.: F16L 37/40, A01G 25/02

(54) **Kupplungsstück**
Coupling piece
Pièce de raccordement

(30) Priorität: 05.05.2009 DE 102009019933
(43) Veröffentlichungstag der Anmeldung: 14.03.2012
(73) Patentinhaber: HUSQVARNA AB, 561 82 Huskvarna (SE)
(72) Erfinder: RENNER, Thomas, 89079 Ulm (DE)
(74) Vertreter: Finkele, Rolf
(86) Internationale Anmeldenummer: PCT/EP2010/002674
(87) Internationale Veröffentlichungsnummer: WO 2010/127815

(56) Entgegenhaltungen:
- DE-A1- 10 050 100
- DE-A1-102006 013 934
- DE-U1- 29 809 787
- DE-U1-202006 001 533
- GB-A- 791 736
- US-A- 4 821 763

## Beschreibung

Die Erfindung betrifft ein Kupplungsstück eines Bewässerungssystems mit einem Kupplungsnippel. Ein Kupplungsstück gemäß dem Oberbegriff von Anspruch 1 ist bekannt aus GB 791 736 A.

Ein Kupplungssystem für Bewässerungseinrichtungen ist als GardenaSteckkupplungssystem bekannt, bei welchem eine flüssigkeitsleitende Leitungskupplung durch lösbar aufeinandergesteckte Kupplungsstücke herstellbar ist. Dabei enthält eines der beiden die Leitungskupplung bildenden Kupplungsstücke einen von einem Grundkörper in Strömungsrichtung weg weisenden Kupplungsnippel, welcher einen Austrittskanal umgibt und durch eine Kupplungshülse des zweiten Kupplungsstücks umschlossen ist. In einem solchen Bewässerungssystem sind Kupplungsstücke mit Wasserstop-Funktion gebräuchlich, bei welchen die Strömungsrichtung von der Kupplungshülse in den Kupplungsnippel verläuft und in der Kupplungshülse ein Verschlusskörper angeordnet ist, welcher bei gelöster Kupplung durch den Wasserdruck einer mit der Kupplungshülse verbundenen Wasserquelle eine Austrittsöffnung verschließt und beim Zusammenfügen der Kupplung durch den Kupplungsnippel entgegen der Strömungsrichtung von der Öffnung abgehoben wird und diese frei gibt. In einem solchen Bewässerungssystem ist ferner eine als Wassersteckdose bezeichnete Anschlussvorrichtung bekannt, bei welcher ein auf der Seite der Wasserquelle angeordnetes Kupplungsstück einen Kupplungsnippel enthält, wie dies auch bei Hahnstücken solcher Bewässerungssysteme üblich ist. Bei der genannten Wassersteckdose ist innerhalb eines Grundkörpers ein in Längsrichtung verschiebbarer Dichtkörper angeordnet, welcher bei gelöster Kupplung einen Wasserstrom in den Austrittskanal des Kupplungsnippels verhindert und beim Aufstecken einer Kupplungshülse unter Freigabe eines Strömungswegs verschoben wird, indem die Kupplungshülse eine stromaufwärts gegen den Kupplungsnippel versetzt angeordnete Schiebehülse verschiebt, welche über quer zur Schieberichtung verlaufende und in Längsschlitzen des Grundkörpers geführte Mitnehmerbolzen den mehrfach gegen die Innenwand des Grundkörpers über Gleitdichtungen abgedichteten Dichtkörper von einer Sperrstellung in eine Durchlassstellung verschiebt. Nach Lösen der Leitungskupplung durch Abnehmen der Kupplungshülse von dem Kupplungsnippel sperrt der Dichtkörper unter Einwirkung der Feder und des Wasserdrucks automatisch wieder den Strömungspfad ab. Der Aufbau dieser Wassersteckdose ist aber aufwendig, weist eine große Baulänge auf und erfordert eine relativ hohe Betätigungskraft beim Herstellen der Leitungsverbindung.

Der vorliegenden Erfindung liegt die Aufgabe zugrunde, ein lösbar selbstsperrendes Kupplungsstück mit einem Kupplungsnippel anzugeben.

Die Erfindung ist im unabhängigen Anspruch beschrieben. Die abhängigen Ansprüche enthalten vorteilhafte Ausgestaltungen der Erfindung.

Die Ausführung eines den Kupplungsnippel tragenden Grundkörpers mit einer in Steckrichtung auf den Kupplungsnippel folgenden, quer zur Steckrichtung ausgerichteten Ringfläche greift auf eine an sich bei Hahnstücken eines solchen Steckkupplungssystems gebräuchliche Form zurück und ist durch die gebräuchliche Form dem Benutzer vorteilhafterweise ohne weiteres vertraut. Die Ringfläche liegt vorzugsweise im wesentlichen in einer senkrecht zur Steckrichtung verlaufenden Ebene. Die Ausbildung eines Durchbruchs durch die Ringfläche und die abgedichtete Führung eines vorzugsweise stiftförmigen Kopplungselements durch den Durchbruch ermöglicht in Verbindung mit der Kopplung des Koppelelements an die Verschiebung des innerhalb des Grundkörpers angeordneten Dichtkörpers bei einfachem und kostengünstigem Aufbau eine Entsperrung des Strömungspfads durch Aufstecken einer Kupplungshülse. Vorteilhafterweise kann der Durchmesser der den Strömungspfad absperrenden Dichtung mit einem höchstens 20%, insbesondere höchstens 15%, vorzugsweise höchstens 10% größeren Durchmessers im Vergleich zu dem Innendurchmesser des Austrittskanals durch den Kupplungsnippel wesentlich kleiner gewählt werden als bei der genannten Wassersteckdose, so dass die Kraft zum Verschieben des Dichtkörpers aus dessen Sperrstellung entgegen der Druckkraft des unter Druck anstehenden Wassers niedrig ist.

Vorteilhafterweise sind mehrere Koppelelemente in um die Längsachse des Kupplungsnippels verteilter Anordnung vorgesehen, wobei bei Ausführung des Dichtkörpers mit den Koppelelementen als einteiliger Kunststoff-Spritzgusskörper vorzugsweise genau zwei um 180° um die Längsachse des Kupplungsnippels versetzt angeordnete Koppelelemente vorgesehen sind. Der Dichtkörper ist vorteilhafterweise durch eine Feder in Richtung der Sperrstellung gedrückt. Eine Verschiebung des Dichtkörpers aus der Sperrstellung erfolgt dann zusätzlich zur Druckkraft des Wassers auch entgegen der Federkraft.

Der Dichtkörper ist, um die Gefahr einer Verkantung zu vermeiden, vorteilhafterweise zusätzlich zu der Führung des wenigstens einen Koppelelements in dem Durchbruch durch die Ringfläche an wenigstens einem in Steckrichtung von der Ringfläche beabstandeten Bereich radial gegen den Grundkörper abgestützt geführt.

In vorteilhafter Weiterbildung kann der Grundkörper in wenigstens zwei Teilkörper, welche als Anschlusskörper und als Stellkörper bezeichnet seien, unterteilt sein, wobei der Anschlusskörper im Gebrauch als ortsfest bezüglich einer Wasserquelle, worunter auch ein mobiles Gerät, wie z. B. ein Schlauchwagen, verstanden sein soll, angesehen werden kann und der Stellkörper, an welchem der Kupplungsnippel angeordnet ist, in Verschieberichtung des Dichtkörpers in wenigstens zwei unterschiedlichen Positionen positionierbar ist. Dabei ist vorzugsweise in einer ersten Position, in welcher der Kupplungsnippel dem Anschlusskörper am nächsten liegt, die bereits beschriebene lösbar selbstsperrende Funktion des Kupplungsstücks gegeben, wogegen in der zweiten Position, in welcher der Kupplungsnippel den Anschlusskörper weiter beabstandet liegt, der Strömungspfad immer geöffnet ist, unabhängig von dem Aufstecken einer Kupplungshülse. Vorteilhafterweise ist der Abstand des Kupplungsnippels von dem Anschlusskörper kontinuierlich variierbar, wofür insbesondere eine Gewindekopplung zwischen Anschlusskörper und Stellkörper vorgesehen sein kann, so dass durch manuelles Verdrehen des Stellkörpers relativ zu dem Anschlusskörper der Abstand in Verschieberichtung stufenlos veränderbar ist. Der Dichtungskörper kann vorteilhafterweise durch einen Anschlag am Anschlusskörper in seiner Verschiebung in Richtung der Sperrstellung begrenzt sein.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Schrägansicht eines Kupplungsstücks,
- Fig. 2: das Kupplungsstück nach Fig. 1 in aufgeschnittener Darstellung,
- Fig. 3: eine Schnittdarstellung einer Leitungsverbindung,
- Fig. 4: ein regulierbares Kupplungsstück in aufgeschnittener Darstellung,
- Fig. 5: das Kupplungsstück nach Fig. 4 in Öffnungsstellung,
- Fig. 6: eine Leitungsverbindung mit dem Kupplungsstück nach Fig. 4.

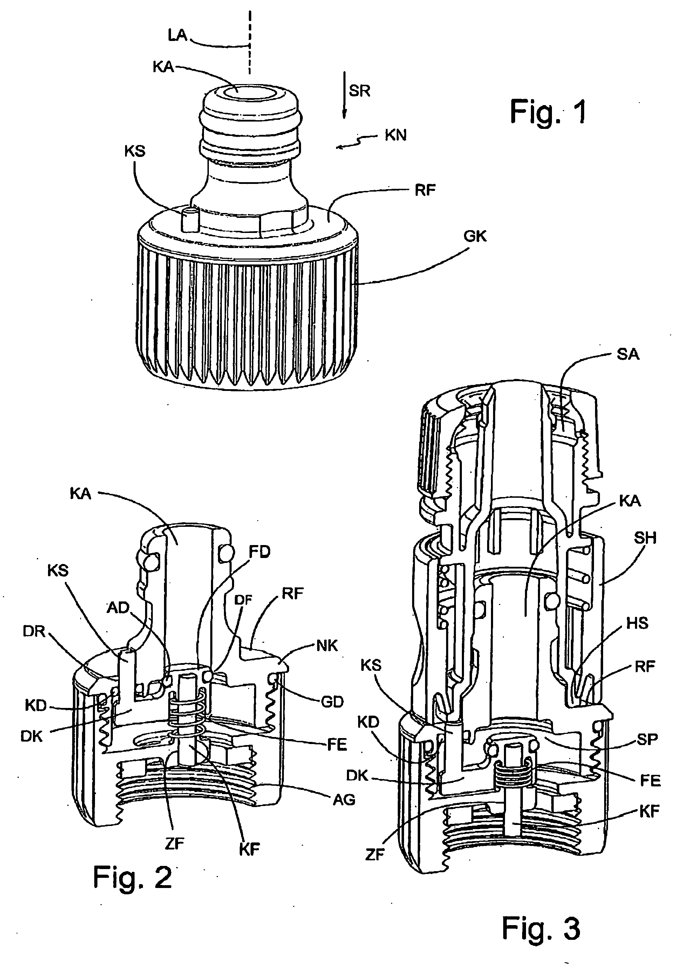

Fig. 1 zeigt in Schrägansicht ein erfindungsgemäßes Kupplungsstück als ein Hahnstück, welches von einem Grundkörper GK in Richtung einer Längsachse LA weg weisend einen Kupplungsnippel KN eines Steckkupplungssystems besitzt. Die Ausbildung des Kupplungsnippels KN ist allgemein bekannt. Der Kupplungsnippel umgibt einen die Mittellängsachse LA des Kupplungsstücks enthaltenden Austrittskanal KA, durch welches Wasser von einer Wasserquelle nach Durchströmen des Grundkörpers austreten und beispielsweise an einen angeschlossenen Verbraucher abgegeben werden kann. An dem Grundkörper GK ist in gebräuchlicher Weise eine Riffelung vorgesehen, um das Kupplungsstück auf ein Anschlussgewinde eines Wasserhahns oder dergleichen aufzuschrauben.

Mit SR ist eine Steckrichtung bezeichnet, in welcher eine zu dem Kupplungsnippel KN korrespondierende Kupplungshülse auf den Kupplungsnippel aufgesteckt werden kann. In Steckrichtung SR auf den Längsabschnitt des Kupplungsnippels KN folgend weist der Grundkörper GK eine Ringfläche RF auf, welche sich um den Fuß des Kupplungsnippels in einer senkrecht zur Längsachse LA liegenden Ebene erstreckt. Eine derartige Ringfläche ist auch bei herkömmlichen Hahnstücken mit Kupplungsnippel aus gebräuchlichen Steckkupplungssystemen gegeben.

Durch einen Durchbruch DR in der Ringfläche RF ragt ein Koppelstift KS entgegen der Steckrichtung SR über die Ringfläche RF hinaus.

Aus der Schnittdarstellung des Kupplungsstücks nach Fig. 1 ergibt sich, dass der Koppelstift KS bei der Durchführung durch den Grundkörper in der Ringfläche mittels einer den Koppelstift KS umgebenden Dichtung KD, welche insbesondere durch einen in eine Vertiefung des Grundkörpers einliegenden O-Ring gegeben sein kann, abgedichtet in dem Durchbruch geführt ist. Der Durchbruch RD und der Koppelstift KS weisen parallel zur Längsachse LA entgegen der Steckrichtung SR.

Der Koppelstift KS ist mit einem Dichtkörper DK gekoppelt und kann mit diesem insbesondere einstückig als Kunststoff-Spritzgussteil hergestellt sein. Der Dichtkörper DK weist bei der Mittellängsachse LA einen in Steckrichtung ragenden Fortsatz KF auf, welcher in einer Zentrierführung ZF des Grundkörpers GK radial quer zur Längsachse LA abgestützt, parallel zur Längsachse LA verschiebbar geführt ist. Der Dichtkörper DK liegt mit einer Dichtung AD an einer Dichtfläche DF des Grundkörpers am Eingang des Austrittskanals KA an einer Dichtfläche DF an.

Vorteilhafterweise ist der Durchmesser der Dichtfläche DF nur um ein geringes Maß größer als der Durchmesser des im wesentlichen kreiszylindrischen Austrittskanals KA. Der Durchmesser der Anlagefläche der Dichtung AD an der Dichtfläche DF ist vorteilhafterweise um höchstens 20%, insbesondere um höchstens15%, vorzugsweise um höchstens 10% größer als der Durchmesser des Austrittskanals KA. Ein kleiner Durchmesser der Anlagefläche der Dichtung AD an der Dichtfläche DF bewirkt eine geringe Andruckkraft durch den Druck von aus einer Wasserquelle an dem Kupplungsstück anstehendem Wasser, so dass auch eine Kraft zum Lösen des durch die Dichtung AD und die Dichtfläche DF gegebenen Sperrventils vorteilhafterweise gering ist.

Der Dichtkörper ist durch eine am Grundkörper abgestützte Feder FE in Richtung der in Fig. 2 dargestellten Sperrstellung gedrückt, so dass das Ventil auch ohne Überdruck von der Seite der Wasserquelle her geschlossen ist.

Der Dichtkörper DK ist aus der in Fig. 2 dargestellten Sperrstellung in Steckrichtung SR entgegen der Federkraft der Feder FE und gegebenenfalls der Druckkraft von anstehendem Wasser verschiebbar, indem der Koppelstift KS mit seinem die Ringfläche überragenden Teil in Steckrichtung weiter in den Grundkörper eingedrückt wird. Dies kann vorteilhafterweise dadurch erfolgen, dass wie in Fig. 3 an einer zusammengefügten Leitungskupplung dargestellt ist, ein zu dem Kupplungsnippel KN komplementäres Kupplungsstück mit einer Kupplungshülse KH in an sich bekannter Weise auf den Kupplungsnippel KN in Steckrichtung SR aufgesteckt ist. Das weitere Kupplungsstück mit der Kupplungshülse KH kann beispielsweise in gebräuchlicher Art ein Schlauchstück sein, welches an einem der Kupplungshülse KH abgewandten Ende einen Schlauchanschlussbereich SA aufweist. Über eine die Kupplungshülse KH umgebende, federbelastete Schiebehülse SH kann die Verriegelung zwischen Kupplungshülse und Kupplungsnippel gelöst und das Schlauchstück abgenommen werden.

Die Kupplungshülse KH weist an ihrem in Steckrichtung vorne liegenden Ende eine Schulterfläche HS auf, welche radial mit der Position des Koppelstifts KS korrespondiert. Beim Aufstecken des Schlauchstücks auf den Kupplungsnippel KN drückt diese Schulterfläche HS den Koppelstift KS in Steckrichtung tiefer in den Durchbruch der Ringfläche ein und verschiebt dabei den Dichtkörper DK in Steckrichtung. Bei der Verschiebung des Dichtkörpers DK in Steckrichtung wird die Dichtung AD von der Gegenfläche DF abgehoben und ein Strömungspfad in den Austrittskanal KA frei gegeben. Durch die radiale Aufweitung des Grundkörpers in dem in Steckrichtung auf den Kupplungsnippel KN folgenden Bereich steht hinter der Ringfläche ein breiter Ringraum um den Dichtkörper als Strömungspfad zur Verfügung, so dass durch den Dichtkörper keine nennenswerte Erhöhung des Strömungswiderstands eintritt.

Nach Entriegeln der Kupplungshülse auf dem Kupplungsnippel und Abziehen des Schlauchstücks entgegen der Steckrichtung von dem Kupplungsnippel wird der Dichtkörper DK durch die Federkraft und den Wasserdruck wieder in Richtung der in Fig. 2 dargestellten Schließstellung gedrückt, wobei sich der Koppelstift KS wieder über die Ringfläche hinaus schiebt. Die Dichtung AD legt sich wieder an die Gegenfläche DF an und der Strömungspfad ist erneut abgesperrt.

Aus den Fig. 1 und 2 ist auch ersichtlich, dass der Grundkörper GK aus zwei Teilen bestehen kann, welche ineinander geschraubt und über eine Dichtung GD abgedichtet sind. Für den Benutzer hat diese Unterteilung, insbesondere auch in der Bedeutung der lösbaren Sperrung des Strömungspfads, keine Bedeutung.

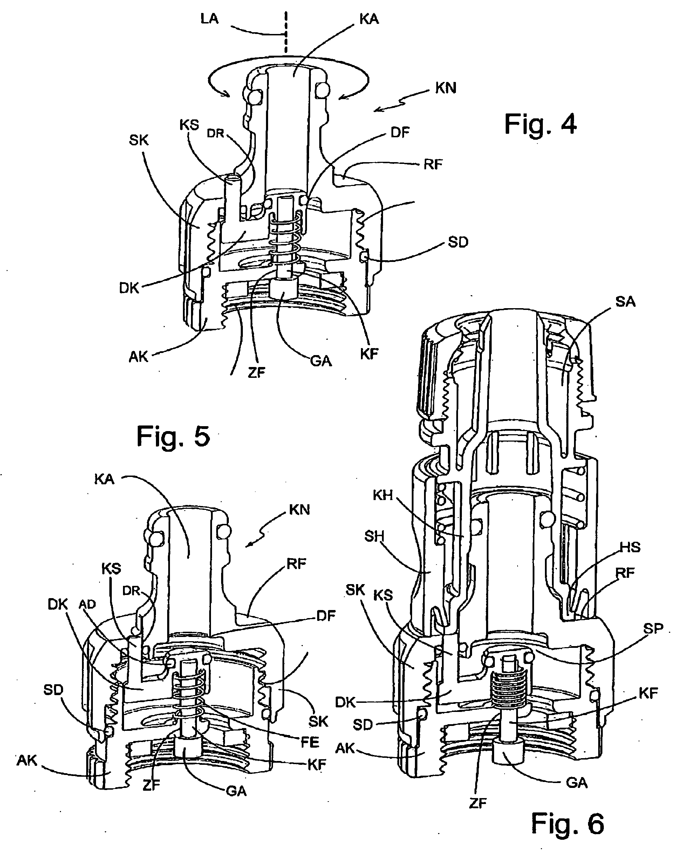

Hingegen sieht eine in Fig. 4 bis Fig. 6 skizzierte Weiterbildung eines Kupplungsstücks vor, dass ein aus einem Anschlusskörper AK und einem Stellkörper SK aufgebauter Grundkörper eine relative Verlagerung des Stellkörpers SK relativ zu dem Anschlusskörper AK erlaubt. Der Anschlusskörper AK sei mit einem Innengewinde AG auf eine als ortsfest angesehene Wasserzufuhr aufgeschraubt. Eine Verbindung zwischen dem Anschlusskörper AK und dem Stellkörper SK sei über ein Gewinde gegeben, wodurch eine Verdrehung des Stellkörpers relativ zu dem als ortsfest angesehenen Anschlusskörper AK mit einer Positionsveränderung des Stellkörpers in Richtung der Längsachse LA des Austrittskanals verbunden ist, was beispielsweise durch den Abstand des Kupplungsnippels KN relativ zu dem Anschlusskörper AK charakterisiert werden kann.

In Fig. 4 ist eine Relativposition von Anschlusskörper AK und Stellkörper SK dargestellt, in welcher der Stellkörper SK vollständig auf den Anschlusskörper AK aufgeschraubt ist und der Kupplungsnippel KN damit innerhalb der Verstellmöglichkeiten dem Anschlusskörper AK in Richtung der Längsachse LK am nächsten liegt. Diese Position entspricht der Ausführung des Kupplungsstücks nach Fig. 1 und Fig. 2. Zu Fig. 2 gleiche Teile sind in Fig. 4 mit gleichen Bezugszeichen versehen. Der Fortsatz KF des Dichtkörpers weist an seinem dem Kupplungsnippel abgewandten und über die Führung ZF hinaus ragenden Teil eine Querschnittsvergrößerung auf, welche in der in Fig. 4 skizzierten Position vorzugsweise einen geringen Abstand zu dem Rand der Führung ZF aufweist, so dass wie in dem Ausführungsbeispiel nach Fig. 2 die Sperrdichtung AD unter dem Druck der Feder FE und gegebenenfalls der Druckkraft von auf Seiten des Anschlusskörpers zugeführtem Wasser an der Gegenfläche DF beim Eingang des Austrittskanals KA anliegt und durch Aufstecken einer Kupplungshülse auf dem Kupplungsnippel und Verschieben des Koppelstifts KS verschoben werden kann.

Wird der Stellkörper SK relativ zu dem Anschlusskörper AK in dem Sinne verdreht, dass der Stellkörper SK mit dem Kupplungsnippel KN bei der Drehung zugleich entgegen der Steckrichtung von dem Anschlusskörper AK in Richtung der Längsachse weg verlagert wird, legt sich das dem Dichtkörper DK abgewandte Ende GA des Fortsatzes KF an den Rand der Führung ZF und verhindert eine weitere Verschiebung des Dichtkörpers von dem Anschlusskörper AK weg, so dass sich die Gegenfläche DF am Eingang des Austrittskanals des Kupplungsnippels KN axial von der Dichtung AD entfernt und je nach Ausmaß der axialen Verlagerung des Stellkörpers ein Spalt als Strömungspfad einstellbarer Größe zwischen dem Dichtkörper und der Gegenfläche an dem Stellkörper SK entsteht. Dabei rückt der Koppelstift KS relativ zu dem Durchbruch DF in der Ringfläche RF tiefer in den Durchbruch bzw. den Stellkörper SK ein. Der Dichtkörper wird dabei mit dem Stellkörper mit gedreht. Die axiale Abstützung des Dichtkörpers über das Endstück GA am Rand der Führung ZF ist so ausgeführt, dass eine Drehung des Dichtkörpers mit dem Stellkörper SK nicht behindert ist.

In Fig. 5 ist eine vorteilhafterweise durch einen mechanischen Anschlag begrenzte Endstellung der Verdrehung des Stellkörpers SK relativ zu dem Anschlusskörper AK mit maximaler Entfernung des Kupplungsnippels von dem Anschlusskörper AK dargestellt. Der Koppelstift KS ist dabei vollständig in die Ringfläche RF eingesenkt und der zwischen der Dichtung AD und der Gegenfläche GF gebildete Strömungspfad hat seine maximale Weite, welche im wesentlichen der Weite bei der in Fig. 3 skizzierten Position mit aufgesteckter Kupplungshülse entspricht.

Vorteilhafterweise kann der Stellkörper SK in kontinuierlichen Zwischenpositionen zwischen den in Fig. 4 und Fig. 5 skizzierten Endpositionen einstellbar sein, wobei vorteilhafterweise ein Reibschluss zwischen Stellkörper SK und Anschlusskörper AK, beispielsweise über die Gleitdichtung SD als Haltekraft ausreicht.

In Fig. 6 ist eine die Position zwischen Stellkörper SK und Anschlusskörper AK nach Fig. 4 bei gleichzeitig auf den Kupplungsnippel aufgesteckter Kupplungshülse dargestellt. Durch das Aufstecken der Kupplungshülse wird der Koppelstift KS wieder im wesentlichen vollständig in die Ringfläche eingedrückt und der Strömungspfad SP zwischen der Dichtung AD und der Gegenfläche DF am Eingang des Austrittskanals AK ist unabhängig von der Relativstellung zwischen Anschlusskörper AK und Stellkörper SK maximal weit offen. Nach Abnahme der Kupplungshülse KH aus der in Fig. 6 dargestellten Verbindungsposition wird der Dichtkörper durch die Feder FE wieder in Richtung der Sperrstellung verschoben, wobei diese Verschiebung bei einer Zwischenposition von Stellkörper zu Anschlusskörper durch den Gegenanschlag GA an dem Rand der Führung ZF begrenzt ist, so dass die zuvor eingestellte Öffnungsweite des Spaltes zwischen der Dichtung AD und der Gegenfläche GF wieder eingenommen wird.

Die Erfindung ist nicht auf die beschriebenen Ausführungsbeispiele beschränkt, sondern im Rahmen fachmännischen Könnens in mancherlei Weise abwandelbar.

## Patentansprüche

1. Kupplungsstück für Bewässerungssystem mit einem Grundkörper (GK) und einem von diesem in eine vorgegebene Strömungsrichtung weg weisenden Kupplungsnippel (KN), welcher einen eine Längsachse (LA) enthaltenden Austrittskanal umgibt, und mit einem innerhalb des Grundkörpers stromaufwärts des Kupplungsnippels in dem Grundkörper angeordneten Dichtkörpers (DK), welcher in einer Sperrstellung mittels einer Sperrdichtung (AD, DF) einen Wasserstrom in den Austrittskanal verhindert und bei Aufstecken einer
Kupplungshülse auf den Kupplungsnippel in einer Steckrichtung (SR) über Koppelstrukturen (KS) entgegen der Strömungsrichtung aus der Sperrstellung in eine
Durchlassstellung verschiebbar ist, **dadurch gekennzeichnet, dass** der Grundkörper (GK) stromaufwärts des Kupplungsnippels (KN) in Form einer quer zur Steckrichtung verlaufenden Ringfläche (RF) radial erweitert ist, und dass die Koppelstrukturen wenigstens ein Koppelelement (KS) enthalten, welches abgedichtet durch einen in Steckrichtung weisenden Durchbruch (DR) in der Ringfläche (RF) hindurchgeführt und in Steckrichtung (SR) verschiebbar und an die Verschiebung des Dichtkörpers (DK) gekoppelt ist, wobei in der Sperrstellung des Dichtkörpers das Koppelelement (KS) über die Ringfläche (RF) hinaus ragt und beim Aufstecken der Kupplungshülse durch die Kupplungshülse weiter in den Grundkörper (GK) einschiebbar ist.

2. Kupplungsstück nach Anspruch 1, **dadurch gekennzeichnet, dass** mehrere um die Längsachse verteilt angeordnete Koppelelemente vorgesehen sind.

3. Kupplungsstück nach Anspruch 1 oder 2, **dadurch gekennzeichnet, dass** das wenigstens eine Koppelelement stiftförmig ausgeführt ist.

4. Kupplungsstück nach einem der Ansprüche 1 bis 3, **dadurch gekennzeichnet, dass** das Koppelelement gegen den Durchbruch mit einem das Koppelelement umgreifenden Dichtring (KD) abgedichtet ist.

5. Kupplungsstück nach einem der Ansprüche 1 bis 4, **dadurch gekennzeichnet, dass** der Dichtkörper (DK) durch eine am Grundkörper abgestützte Feder (FE) in Richtung der Sperrstellung gedrückt und über das Koppelelement (KS) entgegen der Federkraft verschiebbar ist.

6. Kupplungsstück nach einem der Ansprüche 1 bis 5, **dadurch gekennzeichnet, dass** die Sperrdichtung (AD, DF) am Eingang des Austrittskanals (KA) angeordnet ist.

7. Kupplungsstück nach Anspruch 6, **dadurch gekennzeichnet, dass** der Austrittskanal (KA) eine kreiszylindrische Form besitzt.

8. Kupplungsstück nach Anspruch 6 und 7, **dadurch gekennzeichnet, dass** der Durchmesser der Sperrdichtung um höchstens 20%, insbesondere höchstens 15%, vorzugsweise höchstens 10% größer ist als der Durchmesser des Austrittskanals.

9. Kupplungsstück nach einem der Ansprüche 1 bis 8, **dadurch gekennzeichnet, dass** der Dichtkörper (DK) mit seinem in Strömungsrichtung weisenden Ende (FD) in der Sperrstellung in den Austrittskanal (KA) eintaucht.

10. Kupplungsstück nach einem der Ansprüche 1 bis 9, **dadurch gekennzeichnet, dass** der Dichtkörper von der Sperrdichtung entgegen der Strömungsrichtung beabstandet an dem Grundkörper radial abgestützt geführt ist (KF, ZF).

11. Kupplungsstück nach einem der Ansprüche 1 bis 10, **dadurch gekennzeichnet, dass** der Grundkörper in einen Anschlusskörper (AK) und einen Stellkörper (SK) unterteilt ist, welche in Strömungsrichtung relativ zueinander zwischen einer Schließstellung und einer Öffnungsstellung verlagerbar sind, wobei der Kupplungsnippel (KN) an dem Stellkörper (SK) angeordnet ist.

12. Kupplungsstück nach Anspruch 11, **dadurch gekennzeichnet, dass** die Verschiebung des Dichtkörpers (DK) in Strömungsrichtung durch einen Anschlag (GA) an dem Anschlusskörper (AK) begrenzt ist und in der Offnungsstellung die Sperrdichtung immer geöffnet ist.

## Claims

1. Coupling piece for an irrigation system, having a main body (GK) and a coupling nipple (KN) directed away from said main body (GK) in a predetermined direction of flow, said coupling nipple (KN) surrounding an outlet duct containing a longitudinal axis (LA), and having a sealing body (DK) arranged in the main body upstream of the coupling nipple within the main body, said sealing body (DK) preventing a flow of water into the outlet duct in a blocking position by means of a blocking seal (AD, DF), and being displaceable counter to the direction of flow from the blocking position into a passage position when a coupling sleeve is plugged onto the coupling nipple in a plugging direction (SR) via coupling structures (KS), **characterized in that**, upstream of the coupling nipple (KN), the main body (GK) is radially widened in the form of an annular surface (RF) extending transversely to the plugging direction, and **in that** the coupling structures contain at least one coupling element (KS) which is passed in a sealed manner through an aperture (DR), directed in the plugging direction, in the annular surface (RF) and is displaceable in the plugging direction (SR) and coupled to the displacement of the sealing body (DK), wherein, in the blocking position of the sealing body, the coupling element (KS) projects beyond the annular surface (RF) and, when the coupling sleeve is plugged on, is insertable further into the main body (GK) by the coupling sleeve.

2. Coupling piece according to Claim 1, **characterized in that** a plurality of coupling elements that are arranged in a manner distributed around the longitudinal axis are provided.

3. Coupling piece according to Claim 1 or 2, **characterized in that** the at least one coupling element is embodied in a pin-like manner.

4. Coupling piece according to one of Claims 1 to 3, **characterized in that** the coupling element is sealed with respect to the aperture by a sealing ring (KD) engaging around the coupling element.

5. Coupling piece according to one of Claims 1 to 4, **characterized in that** the sealing body (DK) is pressed in the direction of the blocking position by a spring (FE) supported on the main body, and is displaceable counter to the spring force via the coupling element (KS).

6. Coupling piece according to one of Claims 1 to 5, **characterized in that** the blocking seal (AD, DF) is arranged at the inlet to the outlet duct (KA).

7. Coupling piece according to Claim 6, **characterized in that** the outlet duct (KA) has a circularcylindrical form.

8. Coupling piece according to Claims 6 and 7, **characterized in that** the diameter of the blocking seal is at most 20%, in particular at most 15%, preferably at most 10% larger than the diameter of the outlet duct.

9. Coupling piece according to one of Claims 1 to 8, **characterized in that**, in the blocking position, that end (FD) of the sealing body (DK) that is directed in the direction of flow dips into the outlet duct (KA).

10. Coupling piece according to one of Claims 1 to 9, **characterized in that** the sealing body is guided (KF, ZF) in a manner radially supported on the main body at a distance from the blocking seal counter to the direction of flow.

11. Coupling piece according to one of Claims 1 to 10, **characterized in that** the main body is divided into a connecting body (AK) and an adjusting body (SK) which are movable relative to one another in the direction of flow between a closed position and an open position, wherein the coupling nipple (KN) is arranged on the adjusting body (SK).

12. Coupling piece according to Claim 11, **characterized in that** the displacement of the sealing body (DK) in the direction of flow is limited by a stop (GA) on the connecting body (AK) and the blocking seal is always open in the open position.

## Revendications

1. Pièce de raccordement pour un système d'irrigation comprenant un corps de base (GK) et un raccord d'accouplement (KN) tourné à l'opposé de celui-ci dans une direction d'écoulement prédéfinie, lequel raccord d'accouplement entoure un canal de sortie contenant un axe longitudinal (LA), et comprenant un corps d'étanchéité (DK) disposé à l'intérieur du corps de base en amont du raccord d'accouplement dans le corps de base, lequel corps d'étanchéité empêche dans une position de blocage, au moyen d'un verrouillage d'étanchéité (AD, DF), un écoulement d'eau dans le canal de sortie et peut être déplacé à l'encontre de la direction d'écoulement de la position de blocage dans une position de passage lors de l'enfichage d'une douille d'accouplement sur le raccord d'accouplement dans une direction d'enfichage (SR) par le biais de structures d'accouplement (KS), caractérisée en en ce que le corps de base (GK) est élargi radialement en amont du raccord d'accouplement (KN) en forme de surface annulaire (RF) s'étendant transversalement à la direction d'enfichage, et en ce que les structures d'accouplement contiennent au moins un élément d'accouplement (KS) qui est guidé de manière étanchéifiée à travers un orifice (DR) orienté dans la direction d'enfichage dans la surface annulaire (RF) et qui est déplaçable dans la direction d'enfichage (SR) et est accouplé au déplacement du corps d'étanchéité (DK), l'élément d'accouplement (KS) faisant saillie au-delà de la surface annulaire (RF) dans la position de blocage du corps d'étanchéité et pouvant être enfoncé davantage dans le corps de base (GK) par la douille d'accouplement lors de l'enfichage de la douille d'accouplement.

2. Pièce de raccordement selon la revendication 1, **caractérisée en ce que** plusieurs éléments d'accouplement sont disposés de manière répartie autour de l'axe longitudinal.

3. Pièce de raccordement selon la revendication 1 ou 2, **caractérisée en ce que** l'au moins un élément d'accouplement est réalisé sous forme de goupille.

4. Pièce de raccordement selon l'une quelconque des revendications 1 à 3, **caractérisée en ce que** l'élément d'accouplement est rendu étanche vis-à-vis de l'orifice par une bague d'étanchéité (KD) venant en prise autour de l'élément d'accouplement.

5. Pièce de raccordement selon l'une quelconque des revendications 1 à 4, **caractérisée en ce que** le corps d'étanchéité (DK) est pressé dans la direction de la position de blocage par un ressort (FE) supporté sur le corps de base et peut être déplacé à l'encontre de la force de ressort par le biais de l'élément d'accouplement (KS).

6. Pièce de raccordement selon l'une quelconque des revendications 1 à 5, **caractérisée en ce que** le verrouillage d'étanchéité (AD, DF) est disposé à l'entrée du canal de sortie (KA).

7. Pièce de raccordement selon la revendication 6, **caractérisée en ce que** le canal de sortie (KA) possède une forme cylindrique circulaire.

8. Pièce de raccordement selon les revendications 6 et 7, **caractérisée en ce que** le diamètre du verrouillage d'étanchéité est supérieur d'au maximum 20 %, en particulier d'au maximum 15 %, de préférence d'au maximum 10 % au diamètre du canal de sortie.

9. Pièce de raccordement selon l'une quelconque des revendications 1 à 8, **caractérisée en ce que** le corps d'étanchéité (DK) plonge dans le canal de sortie (KA) avec son extrémité (FD) tournée dans la direction d'écoulement dans la position de blocage.

10. Pièce de raccordement selon l'une quelconque des revendications 1 à 9, **caractérisée en ce que** le corps d'étanchéité est guidé (KF, ZF) de manière supportée radialement sur le corps de base à distance du verrouillage d'étanchéité à l'encontre de la direction d'écoulement.

11. Pièce de raccordement selon l'une quelconque des revendications 1 à 10, **caractérisée en ce que** le corps de base est divisé en un corps de raccordement (AK) et un corps de réglage (SK), lesquels peuvent être déplacés dans la direction d'écoulement l'un par rapport à l'autre entre une position de fermeture et une position d'ouverture, le raccord d'accouplement (KN) étant disposé sur le corps de réglage (SK).

12. Pièce de raccordement selon la revendication 11, **caractérisée en ce que** le déplacement du corps d'étanchéité (DK) dans la direction d'écoulement est limité par une butée (GA) sur le corps de raccordement (AK) et le verrouillage d'étanchéité est toujours ouvert dans la position d'ouverture.
